# EUROPÄISCHE PATENTANMELDUNG

(11) **EP 3 627 755 A1**
(43) Veröffentlichungstag der Anmeldung: **25.03.2020**
(21) Anmeldenummer: 18195154.2
(22) Anmeldetag: 18.09.2018
(51) Int. Cl.: H04L 9/08, H04L 9/32, H04L 29/06

(54) **VERFAHREN FÜR EINE SICHERE KOMMUNIKATION IN EINEM KOMMUNIKATIONSNETZWERK MIT EINER VIELZAHL VON EINHEITEN MIT UNTERSCHIEDLICHEN SICHERHEITSNIVEAUS**

(71) Anmelder: Siemens Aktiengesellschaft, 80333 München (DE)
(72) Erfinder: Furch, Andreas, 85354 Freising (DE)

(57) **Zusammenfassung**

Die Erfindung betrifft ein Verfahren für eine sichere Kommunikation in einem Kommunikationsnetzwerk (1) mit einer Vielzahl von Einheiten (10, 20, 30, 40) mit unterschiedlichen Sicherheitsniveaus, aufweisend die Schritte Bereitstellen eines jeweiligen anfänglichen Datensatzes (12, 22) für mindestens zwei sichere Einheiten (10, 20) mit einem hohen Sicherheitsniveau der Vielzahl der Einheiten (10, 20, 30, 40); Bereitstellen eines jeweiligen anfänglichen Datensatzes (32, 42) für mindestens zwei weitere Einheiten (30, 40) mit einem im Vergleich zu den mindestens zwei sicheren Einheiten (10, 20) geringeren Sicherheitsniveau der Vielzahl der Einheiten (10, 20, 30, 40), wobei jede weitere Einheit der mindestens zwei weiteren Einheiten (30, 40) an genau eine sichere Einheit der mindestens zwei sicheren Einheiten (10, 20) gebunden ist; wobei der anfängliche Datensatz (32, 42) der mindestens zwei weiteren Einheiten (30, 40) einen Zufallswert aufweist, wobei der anfängliche Datensatz (12, 22) der mindestens zwei sicheren Einheiten (10, 20) einen Zufallswert und mindestens einen Hash-Wert aufweist, wobei der mindestens eine Hash-Wert basierend auf einer kryptographischen Hash-Funktion erstellt wird, welche den Zufallswert der mindestens einen gebundenen weiteren Einheit der mindestens zwei weiteren Einheiten abbildet; Verteilen eines neuen Zufallswerts (33) an eine erste weitere Einheit der mindestens zwei weiteren Einheiten (30, 40) durch eine erste zugehörige sichere Einheit (10) innerhalb eines sicheren Kommunikationskanals, Aktualisieren zumindest eines Teils der anfänglichen Datensätze (12, 32) der ersten weiteren Einheit (30) und der ersten zugehörigen sicheren Einheit (10) unter Berücksichtigung des neuen verteilten Zufallswerts (33) nach erfolgreicher Überprüfung durch die erste zugehörige sichere Einheit (10); Übermitteln mindestens zweier unterschiedlicher verschlüsselter Werte von der ersten weiteren Einheit (30) an die zweite weitere Einheit (40) der mindestens zwei weiteren Einheiten (30, 40) durch Verteilen mindestens zweier zugehöriger unterschiedlicher Entschlüsselungsdatensätze an die mindestens zwei sicheren Einheiten (10, 20) in mindestens einem sicheren Kommunikationskanal durch die erste weitere Einheit (30) derart, dass anhand der zwei zugehörigen unterschiedlichen Entschlüsselungsdatensätze die mindestens zwei unterschiedlichen verschlüsselten Werte nur kombiniert entschlüsselt werden können und dass die andere weitere Einheit den Entschlüsselungsdatensatz der einen sicheren Einheit erst nach erfolgreicher Prüfung von Autorisierungsdaten der anderen sicheren Einheit durch die eine sichere Einheit erhält und dass die andere weitere Einheit den Entschlüsselungsdatensatz der anderen sicheren Einheit nach erfolgreicher Prüfung von Autorisierungsdaten der einen sicheren Einheit durch die andere sichere Einheit erhält; wobei sich die mindestens zwei sicheren Einheiten (10, 20) voneinander unterscheiden; wobei eine zugrundeliegende Nachricht anhand der mindestens zwei unterschiedlichen verschlüsselten Werte und der Entschlüsselungsdatensätze erhalten wird. Ferner ist die Erfindung auf ein entsprechendes Kommunikationsnetzwerk und Computerprogrammprodukt gerichtet.

## Beschreibung

### 1. Technisches Gebiet

Die Erfindung betrifft ein computer-implementiertes Verfahren für eine sichere Kommunikation in einem Kommunikationsnetzwerk mit einer Vielzahl von Einheiten mit unterschiedlichen Sicherheitsniveaus. Ferner ist die Erfindung auf ein entsprechendes Kommunikationsnetzwerk und Computerprogrammprodukt gerichtet. Die Erfindung kann insbesondere in den technischen Bereichen der Industrieautomatisierung und im Internet der Dinge angesiedelt sein.

### 2. Stand der Technik

Eingebettete Systeme sind aus dem Stand der Technik bekannt. Der Ausdruck eingebettetes System bezeichnet einen Rechner oder auch Computer, der in einen technischen Kontext eingebettet ist. Der Rechner kann mit bestimmten Funktionen ausgestaltet und entsprechend angepasst sein, wie beispielsweise Steuerungs-, Verschlüsselungs-, Entschlüsselungs-, oder Überwachungsfunktionen. Dementsprechend weist der Rechner mindestens eine Applikation, Software oder Programm für die Umsetzung solcher Funktionen auf. Es bestehen zunehmend höhere Anforderungen an die Sicherheit solcher eingebetteter Systeme. Die eingebetteten Systeme werden vermehrt Gefahren oder Hacker-Angriffen in Industrieumgebungen ausgesetzt.

Üblicherweise weisen die eingebetteten Systeme Einheiten mit unterschiedlichen Sicherheitsniveaus auf, ein hohes Sicherheitsniveau oder ein im Vergleich hierzu geringeres Sicherheitsniveau.

Die Einheiten mit einem hohen Sicherheitsniveau werden im Folgenden auch sichere Einheiten oder Sicherheitsmodule genannt. Die Einheiten mit einem vergleichsweise geringeren Sicherheitsniveau werden im Folgenden weitere Einheiten genannt. Beispielsweise können die Einheiten als Chips ausgebildet sein und auf einer Leiterplatte zu einem Modul zusammengefügt werden.

Die sichere Einheit kann Zufallswerte und Schlüssel selbst erzeugen sowie abspeichern und nutzen. Die sicheren Einheiten können einen sicheren Kommunikationskanal aushandeln, sofern sie eine anfängliche Vertrauensbeziehung miteinander verbindet. Ferner kann eine sichere Einheit auch einen Kommunikationskanal mit einer weiteren Einheit aushandeln, jedoch erbt der ausgehandelte Kommunikationskanal dann entsprechend das geringere Sicherheitsniveau der weiteren Einheit. Gleiches gilt auch für die weiteren Einheiten untereinander. Der ausgehandelte Kommunikationskanal erbt ebenfalls das geringere Sicherheitsniveau der beiden weiteren Einheiten.

Gemäß dem Stand der Technik werden die weiteren Einheiten daher zur Erhöhung ihrer Sicherheitsniveaus um eine sichere bzw. als sicherer angesehene Einheit ergänzt oder es wird eine vertrauenswürdige dritte Einheit eingeführt. Die dritte Einheit erhält Kenntnis über die zu schützenden Datenflüsse. Alternativ wird die weitere Einheit zur sicheren Einheit umgerüstet. Das Einfügen zusätzlicher Einheiten sowie das Anpassen bestehender Einheiten ist jedoch aufwendig, komplex und zeitintensiv sowie mit erheblichen Kosten verbunden.

Die vorliegende Erfindung stellt sich daher die objektive technische Aufgabe ein Verfahren für eine sichere Kommunikation in einem Kommunikationsnetzwerk mit einer Vielzahl von Einheiten unterschiedlicher Sicherheitsniveaus bereitzustellen, welches auf beliebige Einheiten anwendbar und effizienter ist.

### 3. Zusammenfassung der Erfindung

Die oben genannte Aufgabe wird erfindungsgemäß durch ein Verfahren für eine sichere Kommunikation in einem Kommunikationsnetzwerk mit einer Vielzahl von Einheiten mit unterschiedlichen Sicherheitsniveaus gelöst, aufweisend die Schritte:
a. Bereitstellen eines jeweiligen anfänglichen Datensatzes für mindestens zwei sichere Einheiten mit einem hohen Sicherheitsniveau der Vielzahl der Einheiten;
b. Bereitstellen eines jeweiligen anfänglichen Datensatzes für mindestens zwei weitere Einheiten mit einem im Vergleich zu den mindestens zwei sicheren Einheiten geringeren Sicherheitsniveau der Vielzahl der Einheiten, wobei
c. jede weitere Einheit der mindestens zwei weiteren Einheiten an genau eine sichere Einheit der mindestens zwei sicheren Einheiten gebunden ist; wobei
d. der anfängliche Datensatz der mindestens zwei weiteren Einheiten einen Zufallswert aufweist; wobei
e. der anfängliche Datensatz der mindestens zwei sicheren Einheiten einen Zufallswert und mindestens einen Hash-Wert aufweist; wobei der mindestens eine Hash-Wert basierend auf einer kryptographischen Hash-Funktion erstellt wird, welche den Zufallswert der mindestens einen gebundenen weiteren Einheit der mindestens zwei weiteren Einheiten abbildet;
f. Verteilen eines neuen Zufallswerts an eine erste weitere Einheit der mindestens zwei weiteren Einheiten durch eine erste zugehörige sichere Einheit innerhalb eines sicheren Kommunikationskanals;
g. Aktualisieren zumindest eines Teils der anfänglichen Datensätze der ersten weiteren Einheit und der ersten zugehörigen sicheren Einheit unter Berücksichtigung des neuen verteilten Zufallswerts nach erfolgreicher Überprüfung durch die erste zugehörige sichere Einheit; und
h. Übermitteln mindestens zweier unterschiedlicher verschlüsselter Werte von der ersten weiteren Einheit an die zweite weitere Einheit der mindestens zwei weiteren Einheiten durch
   - Verteilen mindestens zweier zugehöriger unterschiedlicher Entschlüsselungsdatensätze an die mindestens zwei sicheren Einheiten in mindestens einem sicheren Kommunikationskanal durch die erste weitere Einheit derart, dass
      anhand der zwei zugehörigen unterschiedlichen Entschlüsselungsdatensätze die mindestens zwei unterschiedlichen verschlüsselten Werte nur kombiniert entschlüsselt werden können und dass die andere weitere Einheit den Entschlüsselungsdatensatz der einen sicheren Einheit erst nach erfolgreicher Prüfung von Autorisierungsdaten der anderen sicheren Einheit durch die eine sichere Einheit erhält und dass die andere weitere Einheit den Entschlüsselungsdatensatz der anderen sicheren Einheit nach erfolgreicher Prüfung von Autorisierungsdaten der einen sicheren Einheit durch die andere sichere Einheit erhält; wobei
      sich die mindestens zwei sicheren Einheiten voneinander unterscheiden; wobei
      eine zugrundeliegende Nachricht anhand der mindestens zwei unterschiedlichen verschlüsselten Werte und der beiden Entschlüsselungsdatensätze erhalten wird.

Das erfindungsgemäße Verfahren erhöht die Kommunikationssicherheit der Einheiten unterschiedlicher Sicherheitsniveaus untereinander. Dies wird durch die Verteilung von neuem Zufall gemäß Schritt f. sowie die Kommunikation zwischen zwei weiteren Einheiten gemäß Schritt h. erreicht.

Bei der letztgenannten Kommunikation können die weiteren Einheiten Daten sicher austauschen ohne untereinander einen gesicherten Kanal etablieren zu müssen. Lediglich die weiteren Einheiten erhalten den Inhalt der zugrundeliegenden Nachricht, die sicheren Einheiten im Gegensatz hierzu nicht. Die sicheren Einheiten können auch eine abgefangene Nachricht nicht entschlüsseln.

In einer Ausgestaltung wird der Zufallswert durch die mindestens eine sichere Einheit erzeugt. Dementsprechend ist die sichere Einheit als eine vertrauenswürdige Einheit ausgestaltet. Sie erzeugt echten Zufall.

In einer weiteren Ausgestaltung ist die Vielzahl der Einheiten voneinander separiert, insbesondere durch eine HW-Trennung oder logisch. Dementsprechend sind die Einheiten voneinander ausreichend separiert. Die Separierung kann auf unterschiedliche Art und Weise flexibel bestimmt werden. Dadurch erhalten die Einheiten vorteilhafterweise keinerlei Zugriff auf die Ressourcen der anderen Einheiten.

In einer weiteren Ausgestaltung weist der anfängliche Datensatz der mindestens zwei sicheren und/oder der mindestens zwei weiteren Einheiten jeweils weiterhin eine Konfiguration oder ein Zertifikat auf.

In einer weiteren Ausgestaltung weist die Konfiguration oder das Zertifikat die Beziehungen zwischen den sicheren und den weiteren Einheiten, eine Einsatzdauer, eine Anzahl zu übertragener Bits, eine maximale Anzahl zu übertragener Bits für den sicheren Kommunikationskanal, Anzahl der Übertragungsrunden und/oder sonstige Daten hinsichtlich Netzwerktopologie oder dem sicheren Kommunikationskanal zwischen weiteren und sicheren Einheiten auf. Dementsprechend können die anfänglichen Datensätze weitere Daten umfassen, wie eine Konfiguration. Dementsprechend können anhand der Konfiguration vorteilhafterweise Attribute, Eigenschaften oder sonstige Parameter, im Falle von Zertifikaten auch dynamisch, festgelegt werden, wie Einsatzdauer für die sicheren Kommunikationskanäle, siehe weiter unten.

In einer weiteren Ausgestaltung ist die zugehörige sichere Einheit die sichere Einheit, an welche die erste weitere Einheit gebunden ist oder eine andere sichere Einheit, an welche die erste weitere Einheit nicht gebunden ist. Dementsprechend kann der neue Zufallswert durch eine beliebige sichere Einheit erzeugt und an die weitere Einheit verteilt werden. Die sichere Einheit kann dabei die gebundene sichere Einheit sein oder eine andere, welche für die gebundene sichere Einheit einspringt bzw. die Neuverteilung übernimmt. Dadurch wird vorteilhafterweise sichergestellt, dass in jedem Fall eine Prüfung durch die gebundene sichere Einheit erfolgt.

In einer weiteren Ausgestaltung weist die Verteilung weiterhin die Schritte auf:
- Senden des neuen Zufallswerts an die erste weitere Einheit über einen sicheren Kommunikationskanal durch die erste zugehörige sichere Einheit;
- Bestimmen eines neuen Hash-Werts durch die erste weitere Einheit, wobei der neue Hash-Wert basierend auf einer kryptographischen Hash-Funktion erstellt wird, welche den neuen Zufallswert berücksichtigt;
- Überprüfen der Korrektheit des neuen Hash-Werts durch diejenige sichere Einheit, an welche die erste weitere Einheit gebunden ist; und
- Empfangen eines weiteren neuen Hash-Werts durch die sichere Einheit nach erfolgreicher Überprüfung der Korrektheit des neuen Hash-Werts;
   falls die mindestens eine sichere Einheit die sichere Einheit ist, an welche die erste weitere Einheit gebunden ist; und
   Empfangen des Prüfergebnisses durch die sichere Einheit nach erfolgreicher Überprüfung der Korrektheit des neuen Hash-Werts;
   falls die mindestens eine sichere Einheit die andere sichere Einheit ist, an welche die erste weitere Einheit nicht gebunden ist.

Dementsprechend erfolgt die Prüfung stets durch die gebundene sichere Einheit und keine andere. Mit anderen Worten, ist die Prüfung davon abhängig, ob die sichere Einheit die gebundene sichere Einheit ist oder nicht. Dadurch wird vorteilhafterweise sichergestellt, dass die Prüfung durch die richtige sichere Einheit erfolgt, welche die zugehörigen anfänglichen Daten der an sie gebundenen weiteren Einheit hat.

In einer weiteren Ausgestaltung wird nach der Verteilung der anfängliche Datensatz der sicheren Einheit aktualisiert, an welche die erste weitere Einheit gebunden ist. Dementsprechend werden nach der Neuverteilung sowie Prüfung die alten anfänglichen Datensätze auf Basis der aktuellen oder neuen Werte angepasst, beispielsweise mit diesen überschrieben. Dadurch wird sichergestellt, dass die Einheiten nach jeder Neuverteilung die aktuellen Werte erhalten und die weitere Neuverteilung durch die sichere Einheit erneut auf Basis der aktuellen Werte erfolgt.

Verfahren nach einem der vorhergehenden Ansprüche, wobei der Zufallswert und/oder der Hash-Wert der anfänglichen Datensätze aktualisiert werden.

In einer weiteren Ausgestaltung umfasst das Übermitteln das Senden der neuen Hash-Werte von der weiteren Einheit an die sichere Einheit in dem sicheren Kommunikationskanal. Dementsprechend wird sichergestellt, dass der neue Hash-Wert erst nach erfolgreicher Prüfung und nicht vorher an die sichere Einheit gesendet wird. Dadurch wird sichergestellt, dass die weitere Einheit authentisiert ist und die sichere Einheit den Hash-Wert korrekt aktualisiert.

In einer weiteren Ausgestaltung authentisiert sich die sichere Einheit gegenüber der weiteren Einheit nach dem anonymen Aufbau des sicheren Kanals.

In einer weiteren Ausgestaltung ist die weitere Einheit bei erfolgloser Prüfung kompromittiert und es wird in Schritt g. durch die sichere Einheit keine Aktualisierung vorgenommen. Dementsprechend erfolgt andernfalls eine anderweitige Behandlung der weiteren Einheit. Der weitere neue Hash-Wert wird folglich in diesem Fall nicht von der weiteren Einheit an die sichere Einheit in dem sicheren Kommunikationskanal gesendet.

Ferner betrifft die Erfindung ein Kommunikationsnetzwerk zum Durchführen des obigen Verfahrens.

Die Erfindung betrifft ferner ein Computerprogrammprodukt mit einem Computerprogramm, das Mittel zur Durchführung des oben beschriebenen Verfahrens, wenn das Computerprogramm auf einer programmgesteuerten Einrichtung zur Ausführung gebracht wird.

Ein Computerprogrammprodukt, wie z.B. ein Computerprogramm-Mittel, kann beispielsweise als Speichermedium, wie z.B. Speicherkarte, USB-Stick, CD-ROM, DVD, oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogrammprodukt oder dem Computerprogramm-Mittel erfolgen. Als programmgesteuerte Einrichtung kommt insbesondere eine Steuereinrichtung, wie beispielsweise ein Industriesteuerungs-PC oder eine Speicherprogrammierbare Steuerung oder ein Programmable Logic Controller, kurz PLC, oder ein Mikroprozessor für eine Smartcard oder dergleichen in Frage.

### 4. Kurze Beschreibung der Zeichnungen

In der folgenden detaillierten Beschreibung werden vorliegend bevorzugte Ausführungsformen der Erfindung weiter beschrieben mit Bezug auf die folgenden Figuren.
- FIG 1: zeigt ein Kommunikationsnetzwerk gemäß einer Ausführungsform der Erfindung.
- FIG 2: zeigt ein Ablaufdiagramm gemäß einer Ausführungsform der Erfindung.
- FIG 3: zeigt ein Ablaufdiagramm gemäß einer Ausführungsform der Erfindung.
- FIG 4: zeigt ein Ablaufdiagramm gemäß einer Ausführungsform der Erfindung.

### 5. Beschreibung der bevorzugten Ausführungsformen

Im Folgenden werden bevorzugte Ausführungsformen der vorliegenden Erfindung in Bezug auf die Figuren beschrieben.

### Kommunikationsnetzwerk

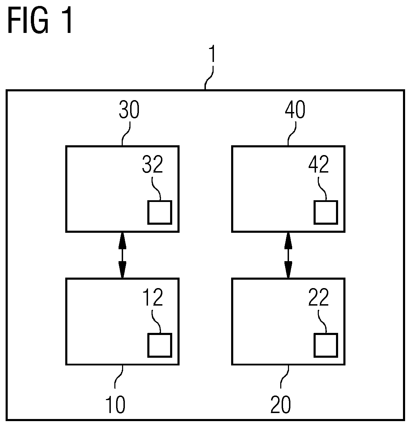

Figur 1 stellt ein beispielhaftes Kommunikationsnetzwerk 1 zum Durchführen des Verfahrens für eine sichere Kommunikation zwischen einer Vielzahl von Einheiten 10, 20, 30, 40 mit unterschiedlichen Sicherheitsniveaus dar. Die Einheiten lassen sich in sichere 10, 20 und weitere Einheiten 30, 40 einteilen. Die sicheren Einheiten 10, 20 weisen ein hohes Sicherheitsniveau auf und die weiteren Einheiten 30, 40 vergleichsweise ein geringeres Sicherheitsniveau. In Figur 1 ist die weitere Einheit 30 an die sichere Einheit 10 gebunden sowie die weitere Einheit 40 an die sichere Einheit 20 gebunden. Diese Bindung wird im Folgenden als spezielle Bindung verstanden, siehe weiter unten.

Die weiteren Einheiten 30, 40 erhalten, beispielsweise im Rahmen ihrer Fertigung in einer sicheren Umgebung, einen anfänglichen, vertrauenswürdigen und zufälligen Wert *rand* und können Maßnahmen für *Secure Boot* und *Runtime-Integrity* implementiert haben. Die sicheren Einheiten 10, 20 können im Gegensatz hierzu die zufälligen Werte *rand* jederzeit selbst erzeugen. Die zufälligen Werte können auch rand-Werte oder Zufallswerte genannt werden. Sie werden im Folgenden als Geheimnisse der Einheiten 10, 20, 30, 40 verstanden. Dementsprechend weist jede Einheit 10, 20, 30, 40 einen anfänglichen Datensatz 12, 22, 32, 42 mit einem zugehörigen Zufallswert auf.

Die Einheiten 10, 20, 30, 40 können voneinander separiert sein. Eine ausreichende Separierung oder Trennung kann durch eine konkrete HW-Trennung realisiert werden. Folglich ist eine Einheit durch ein eigenes HW-Modul realisiert. Beispiele hierfür sind Produkte, die verschiedene Chips als Einheiten auf einer Leiterplatte zu einem Modul zusammenfügen. Die Separierung kann auch auf andere Art und Weise erfolgen, wie logisch, sofern sichergestellt ist, dass eine Einheit keinerlei Zugriff auf die Ressourcen anderer Einheiten hat.

Ferner kann im Rahmen der sicheren Umgebung in der Fertigung eine feste, höchstens administrativ durch berechtigte Instanzen änderbare Konfiguration der sicheren und weiteren Einheiten 10, 20, 30, 40 bezüglich möglicher Kommunikationswege zwischen den Einheiten erfolgen.

In diesem Zusammenhang wird jede weitere Einheit 30, 40 an genau eine sichere Einheit 10, 20 auf spezielle Art und Weise gebunden. Dementsprechend ist eine weitere Einheit 30, 40 stets an genau eine sichere Einheit 10, 20 gebunden. Die sichere Einheit erhält einen Hash-Wert *h(rand)*, basierend auf einer beliebigen kryptographischen Hash-Funktion *h*, der von der Fertigung über den *rand*-Wert der an sie gebundenen weiteren Einheit gebildet wird.

Die Konfiguration der sicheren Einheiten 10, 20 kann mehrere weitere Einheiten 30, 40 beinhalten, an die sie gebunden sind, umgekehrt ist die Beziehung jedoch eindeutig. Ferner kann jeder sicheren Einheit 10, 20 per Konfiguration mitgeteilt werden, welche sonstigen speziellen Bindungen zwischen sicheren 10, 20 und weiteren Einheiten 30, 40 im Kommunikationsnetzwerk 1 vorhanden sind. Zusätzlich kann die Konfiguration weitere Daten aufweisen, beispielsweise wie die Einsatzdauer bzw. maximale Anzahl zu übertragener Bits für die gesicherten Kanäle weiterer 30, 40 mit sicheren Einheiten 10, 20 festgelegt ist. Die entsprechende Festlegung kann auf Basis einer Bedrohungs- und Risikoanalyse im Vorfeld erstellt werden. Dementsprechend können die anfänglichen Datensätze 12, 22, 32, 42 der Einheiten 10, 20, 30, 40, einen Hash-Wert und/oder Konfiguration aufweisen. Der Hash-Wert kann dabei Teil der Konfiguration sein.

Alternativ zur statischen Konfiguration der Kommunikationsbeziehungen, können die sicheren Einheiten 10, 20 auch dynamisch auf Basis von Zertifikaten mit erweiterten Attributen konfiguriert werden. Hierbei können sie auf Basis eines Root-CA Schlüsselpaares konfiguriert werden. Ferner können die erweiterten Attribute die möglichen Kommunikationsbeziehungen der im Zertifikat betrachteten Einheiten, wie die weiteren Einheiten 30, 40, an die eine sichere Einheit 10, 20 gebunden ist sowie die Einsatzdauer bzw. maximale Anzahl zu übertragener Bits für die gesicherten Kanäle dieser weiteren Einheiten 30, 40 mit den sicheren Einheiten 10, 20 aufweisen.

Die anfänglichen Zufallswerte werden im Fall der weiteren Einheiten 30, 40 zunächst im Rahmen des Aufbaus eines sicheren Kommunikationskanals mit einer sicheren Einheit 10, 20 eingesetzt. Dieser Aufbau erfolgt anonym gemäß Standardverfahren. Die nächste Kommunikation bzw. Kanalaushandlung der weiteren Einheit 30, 40 kann entweder mit einer ebenfalls weiteren Einheit 30, 40 oder einer sicheren Einheit 10, 20 erfolgen. Nach jeder Kommunikation mit einer weiteren Einheit 30, 40 erfolgt als nächstes wieder eine Kanalaushandlung eines sicheren Kommunikationskanals mit einer sicheren Einheit 10, 20.

### Kommunikation zwischen den Einheiten 10, 20, 30, 40

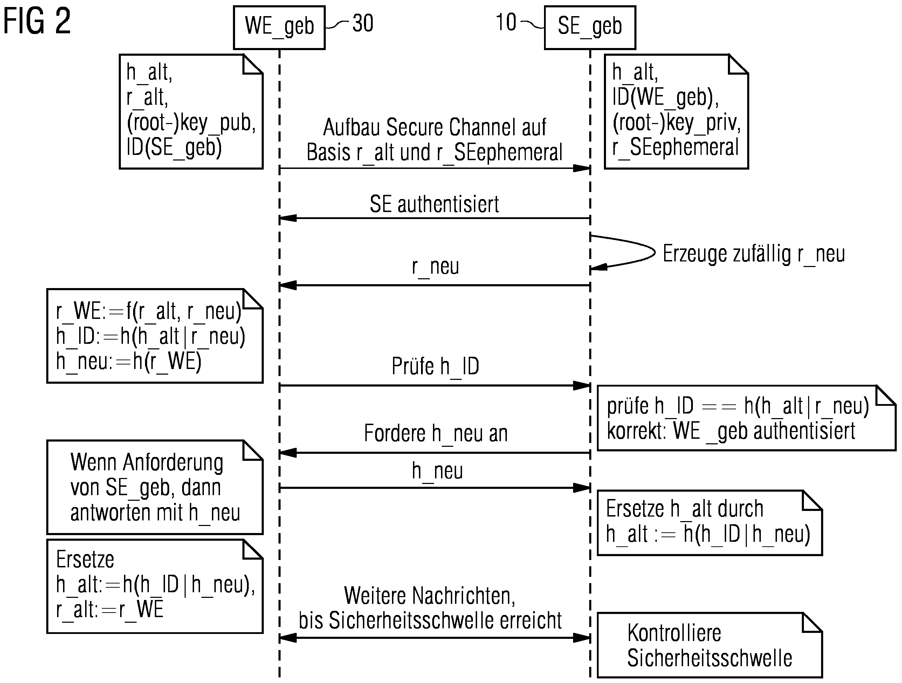

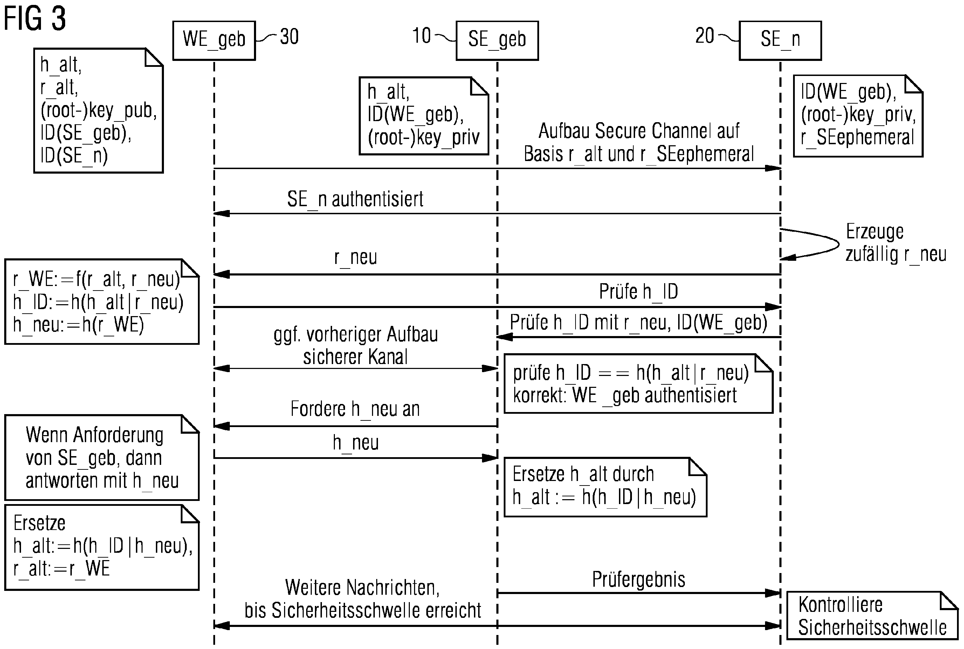

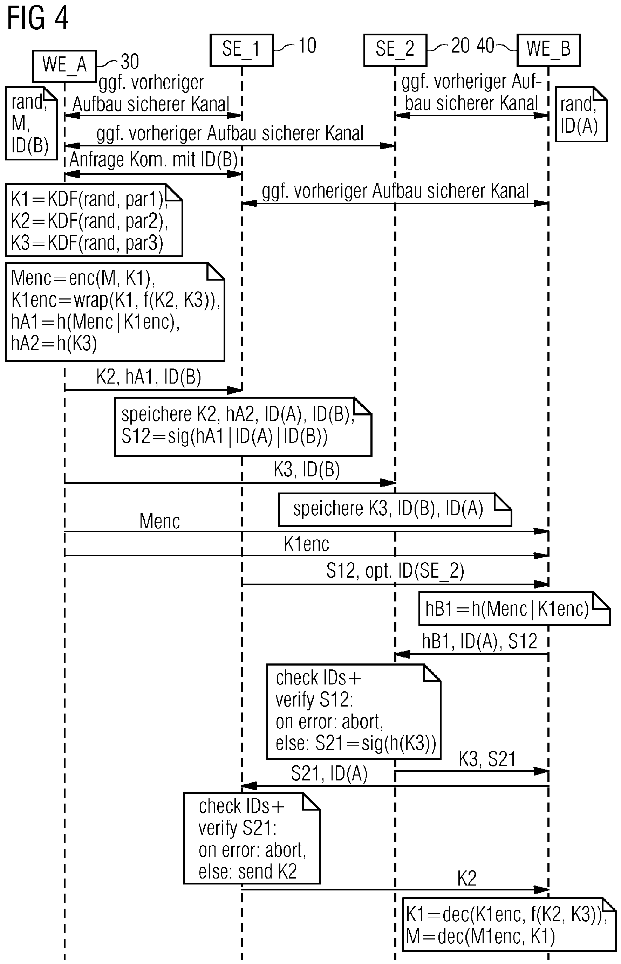

Die Kommunikation zwischen zwei weiteren Einheiten 30, 40 erfolgt gemäß Figur 4. Die sicheren Einheiten 10, 20 können im Gegensatz dazu jederzeit neue sichere Kommunikationskanäle gemäß Standardverfahren untereinander aushandeln und erzeugen für jede Kanalaushandlung neue Zufallswerte, die nur einmalig eingesetzt werden. Das Standardverfahren ist in den Figuren nicht gezeigt. Dementsprechend bedarf es hier keines Erneuerungsvorgangs gemäß den Figuren 2 und 3.

Ferner wird die Einsatzdauer bzw. maximale Anzahl zu übertragener Bits für die ausgehandelten sicheren Kanäle zwischen einer weiteren Einheit 30, 40 und einer sicheren Einheit 10, 20 durch die entsprechende Konfiguration vorgegeben, siehe weiter oben.

Im Fall eines sicheren Kommunikationskanals zwischen einer weiteren und einer sicheren Einheit kontrolliert die sichere Einheit die maximale Kanalnutzung auf Basis der ihr bekannten Konfiguration. Im anderen Fall eines sicheren Kommunikationskanals zwischen zwei sicheren Einheiten entscheiden die jeweiligen Einheiten selbstständig, wie lange sie den Kanal aufrecht erhalten wollen.

### Verteilen eines neuen Zufallswerts: Erneuerungsvorgang

Figuren 2 und 3 stellen Ablaufdiagramme des Erneuerungsvorgangs im Falle der Kommunikation zwischen weiteren und sicheren Einheiten beispielhaft im Detail dar.

Die sichere Einheit *SE_geb* 10 erzeugt für die weitere Einheit *WE_geb* 30 einen neuen Zufallswert *r_neu* und sendet diesen an die weitere Einheit *WE_geb* 30 innerhalb eines vorher anonym aufgebauten sicheren Kommunikationskanals.

Die weitere Einheit *WE_geb* 30 empfängt den neuen Zufallswert *r_neu.* Nach Empfang des neuen Zufallswerts *r_neu* kann sie diesen geeignet mit ihrem zuletzt gespeicherten Zufallswert *r_alt,* beispielsweise durch Anwendung einer XOR-Verknüpfung oder unter Einsatz der Hash-Funktion *h*, zu einem neuen Zufallswert *r_WE* verknüpfen. Der Zufallswert *r_WE* kann den vorherigen Zufallswert *r_alt* durch Kombination beider Werte mit einem neuen Wert überschreiben. Zusätzlich kann die weitere Einheit *WE_geb* 30 weitere Werte, wie die Werte *h_ID* := *h(h_alt*/*r_neu)* sowie *h_neu :*= *h(r_WE)* berechnen. Die weitere Einheit *WE_geb* 30 sendet daraufhin den berechneten Wert *h_ID* für eine Überprüfung des *h_ID* durch die sichere Einheit SE_geb 10 innerhalb des vorher aufgebauten sicheren Kommunikationskanals an die sichere Einheit *SE_geb* 10.

Falls die sichere Einheit SE_geb 10 an die weitere Einheit WE_geb 30 gemäß Figur 2 gebunden ist, prüft sie den empfangenen Wert *h_ID.* Bei der Prüfung berechnet sie den Wert *h_ID* erneut auf Basis des zuletzt für die zugehörige weitere Einheit *WE_geb* 30 gespeicherten Werts *h_alt* und prüft diesen auf Gleichheit mit dem übertragenen Wert *h_ID.* Dabei erfolgt die Prüfung durch diejenige sichere Einheit 10, an welche die weitere Einheit 30 gebunden ist.

Die weitere Einheit WE_geb 30 sendet nach erfolgreicher oder positiver Prüfung *h_neu* innerhalb eines sicheren Kommunikationskanals an die sichere Einheit SE_geb 10.

Ferner ersetzen die Einheiten 10, 30 den Wert *h_alt* durch *h(h_ID*/*h(neu)).* Ferner ersetzt die weitere Einheit *WE_geb* 30 ihren alten Zufallswert *r_alt* durch *r_WE.* Alternativ oder zusätzlich können die sicheren und weiteren Einheiten andere Werte berechnen, überprüfen und/oder aktualisieren.

Bei negativer oder erfolgloser Prüfung vermerkt die sichere Einheit *SE_geb* 10 die zugehörige weitere Einheit *WE_geb* 30 als kompromittiert und behandelt sie im Folgenden gemäß einer vorher festgelegten Fehler-Policy, beispielsweise indem sie mit dieser nicht mehr weiter kommuniziert. Gegebenenfalls kommuniziert sie mit der sicheren Einheit, von der sie die neuen Werte erhalten hat, und es wird von dieser ebenfalls eine Fehlerbehandlung angestoßen.

Andernfalls, falls die sichere Einheit *SE_n* 20 nicht an die weitere Einheit *WE_geb* 30 gemäß Figur 2 gebunden ist, sendet die sichere Einheit *SE_n* 20 den Wert *h_ID,* den Zufallswert *r_neu* sowie das Identifikationsmerkmal *ID (WE_geb)* der weiteren Einheit *WE_geb* 30 gemäß Figur 3 an die weitere Einheit *WE_geb* 30 gebundene sichere Einheit SE_geb 10 innerhalb des mit der sicheren Einheit SE_geb 10 ausgehandelten sicheren Kommunikationskanals. Sollte die Topologie dies nicht erlauben, wird eine Fehlerbehandlung angestoßen.

Die an die weitere Einheit *WE_geb* 30 gebundene sichere Einheit *SE_geb* 10 prüft den empfangenen Wert *h_ID.* Mit anderen Worten, erfolgt die Prüfung in den Figuren 2 und 3 stets durch diejenige sichere Einheit *SE_geb* 10, an welche die weitere Einheit *WE_geb* 30 gebunden ist. Die Prüfung selbst stimmt in den Figuren 2 und 3 überein. Zusätzlich, nach der Prüfung sowie Aktualisierung der Werte, teilt die sichere Einheit *SE_geb* 10 der anderen sicheren Einheit *SE_n* 20 das positive Prüfergebnis mit.

Die Kommunikationskanäle von weiteren Einheiten mit sicheren Einheiten können anschließend für eine begrenzte Anzahl von Datenübertragungsrunden beliebigen Inhalts genutzt werden, insbesondere in Abhängigkeit von der möglichen Einsatzdauer bzw. maximalen Anzahl zu übertragener Bits.

### Kommunikation zwischen den weiteren Einheiten 30, 40

Figur 4 stellt ein Ablaufdiagramm für eine Kommunikation zwischen zwei weiteren Einheiten WE_A 30, WE_B 40 dar. Wenn eine weitere Einheit WE_A 30 einen Kommunikationskanal zu einer anderen weiteren Einheit WE_B 40 aufbauen will, sendet sie eine entsprechende Anfrage innerhalb eines sicheren Kommunikationskanals an diejenige sichere Einheit SE_1 10, an die sie gebunden ist. Die Anfrage ist entsprechend auf eine Kommunikation der weiteren Einheit WE_A 30 mit der weiteren Einheit WE_B 40 gerichtet. In anderen Worten, will die weitere Einheit WE_A 30 eine Nachricht M an die weitere Einheit WE_B 40 senden.

Nach Empfang der Anfrage durch die sichere Einheit prüft die sichere Einheit zunächst, ob die weiteren Einheiten WE_A 30 und WE_B 40 gemäß Konfiguration miteinander kommunizieren können und an welche sicheren Einheiten SE_1 10, SE_2 20 sie gebunden sind. Die Prüfung ist in Figur 4 nicht im Detail gezeigt und erfolgt wie folgt.

### Prüfung der Anfrage

Falls die weitere Einheit WE_A 30 nicht an die sichere Einheit SE_1 10 gebunden ist, wird die Anfrage abgelehnt.

Falls die weiteren Einheiten WE_A 30 und WE_B 40 oder die weitere Einheit WE_B 40 und die sichere Einheit SE_1 10 nicht miteinander kommunizieren können, wird die Anfrage ebenfalls abgelehnt.

Falls die weiteren Einheiten WE_A 30 und WE_B 40 beide an dieselbe sichere Einheit SE_1 10 gebunden sind, stellt die sichere Einheit SE_1 10 eine oder mehrere Anfragen an beliebige andere sichere Einheiten, ob diese in der Lage sind, sich für den Ablauf der Kommunikation an die weitere Einheit WE_B 40 zu binden und mit der weiteren Einheit WE_A 30 zu kommunizieren.

Sollte keine derartige sichere Einheit existieren oder verfügbar sein, wird die Anfrage ebenfalls abgelehnt. Sollte eine derartige sichere Einheit SE_2 20 existieren, teilt die sichere Einheit SE_1 10 dies der weiteren Einheit WE_B 40 im Rahmen der ersten späteren Übertragung von Daten der sicheren Einheit SE_1 10 an die weitere Einheit WE_B 40 mit. Die weitere Einheit WE_B 40 setzt daraufhin im Rahmen des Kommunikationskanals mit der weiteren Einheit WE_A 30 die sichere Einheit SE_2 20 als für sie zeitweilig zugehörige sichere Einheit ein.

Falls die weiteren Einheiten WE_A 30, WE_B 40 nicht an dieselbe sichere Einheit SE_1 10, SE_2 20 gebunden sind, können folglich alle vier Einheiten miteinander kommunizieren und die Anfrage wird durch Bestätigung angenommen.

Im Folgenden wird zur Veranschaulichung in Figur 1 und Figur 4 angenommen, dass die weitere Einheit WE_A 30 an die sichere Einheit SE_1 10 gebunden ist sowie die weitere Einheit WE_B 40 an die sichere Einheit SE_2 20 gebunden ist.

Gemäß Figur 4 erzeugt die weitere Einheit WE_A 30 zunächst auf Basis ihres aktuellen Zufallswerts *rand* sowie dreier vorkonfigurierter Konstanten *par1, par2 und par3* mit Hilfe einer Schlüsselableitungsfunktion *KDF,* beispielsweise unter Einsatz der kryptographischen Hash-Funktion *h*, drei Schlüssel *K1, K2* und *K3.* Ferner verschlüsselt sie die Nachricht *M* auf Basis von *K1* zu *Menc* und *K1* auf Basis von *K2* und *K3* zu *K1enc* derart, dass eine Entschlüsselung nur dann erfolgen kann, wenn sowohl *K2* als auch *K3* bekannt sind. Hierbei kann ein Key-Wrapping Verfahren zum Einsatz kommen. Ferner berechnet die weitere Einheit WE_A 30 kryptographische Hashwerte *h(Menc(K1enc)* von der Konkatenation von *Menc* und *K1enc* sowie h(K3) von K3. Ferner sendet die weitere Einheit WE_A 30 die berechneten Werte, nämlich *h(Menc(K1enc), h(K3), ID(B),* das Identitätsmerkmal von B, sowie *K2* an die sichere Einheit SE_1 10 in einem sicheren Kommunikationskanal.

Die sichere Einheit SE_1 10 berechnet nach Empfang der obigen Werte eine digitale Signatur *S12* über die Zeichenkette *h(Menc(K1enc)* /*ID(A)* /*ID(B)* und speichert einige Werte, wie dargestellt.

Die weitere Einheit WE_A 30 sendet *ID_B* sowie *K3* an die sichere Einheit SE_2 10, welche einige Werte speichert, wie dargestellt. Die weitere Einheit WE_A 30 sendet weiterhin Menc und K1enc an die weitere Einheit WE_B 40 unter Nutzung der Kommunikationsmöglichkeit zwischen den weiteren Einheiten.

Die sichere Einheit SE_1 10 sendet S12 und ID(SE_2) an die weitere Einheit WE_B 40 innerhalb eines sicheren Kommunikationskanals.

Die weitere Einheit WE_B 40 berechnet *h(Menc(K1enc)* und sendet *h(Menc(K1enc), ID(A)* sowie *S12* an die sichere Einheit SE_2 20.

Die sichere Einheit SE_2 40 prüft *S12* und die Korrektheit der übermittelten Identitäten *ID(A)* bzw. *ID(B).* Bei erfolgreicher Prüfung erstellt sie die digitale Signatur *S21* über *h(K3)* und sendet *S21* und *K3* an die weitere Einheit WE_B 40.

Die weitere Einheit WE_B 40 sendet *S21* und *ID(A)* an die sichere Einheit SE_1 10.

Die sichere Einheit SE_1 10 prüft *S21* und die Korrektheit der übermittelten Identitäten *ID(A)* bzw. *ID(B).* Bei erfolgreicher Prüfung sendet sie *K2* an die weitere Einheit WE_B 40.

Die weitere Einheit WE_B 40 verwendet *K2* und *K3,* um *K1* zu erhalten und *K1*, um die Nachricht *M* zu erhalten.

Falls eine weitere Einheit WE_A 30 oder WE_B 40 von einer sicheren Einheit SE_1 10, SE_2 20 eine Fehlerantwort erhält, verhält sie sich gemäß obiger Fehler-Policy. Beispielsweise im Fall der weiteren Einheiten WE_A 30, WE_B 40 indem sie n-mal eine erneute Kommunikation gemäß dem erfindungsgemäßen Verfahren durchführt und die weitere Einheit WE_B 40 anschließend als nicht erreichbar kennzeichnet.

Bevorzugt verwendet eine weitere Einheit die Schlüssel *K1*, *K2* und *K3* für maximal eine Nachricht *M* festgelegter maximaler Länge. Dies hat sich hinsichtlich der Sicherheit als besonders vorteilhaft erwiesen. Zusätzlich bedeutet dies den größtmöglichen Overhead des erfindungsgemäßen Verfahrens.

Die maximale Länge kann im Rahmen der festgestellten Sicherheitsniveaus der Einheiten bestimmt werden.
Bevorzugt können die weiteren Einheiten ebenfalls wie die sicheren Einheiten sichere Löschprozeduren für residuale Informationen ausführen und speichern lediglich ihren letzten zufälligen Zufallswert sowie ihren letzten Hash-Wert, bevorzugt nichtvolatil.
Bevorzugt sind die Implementierungen der Kommunikationskanalsicherheit der weiteren Einheiten gegen "simple power analysis" und ähnlich geartete Angriffe resistent ausgestaltet.

### Übersicht der sicheren Einheit SE_1 10

SE_1 10 ist eine sichere und damit vertrauenswürdige Einheit. Sie erzeugt echten Zufall und gibt keine eigenen Geheimnisse preis.

Hinsichtlich der Kommunikation zwischen zwei weiteren Einheiten 30, 40 erhält sie folgende Daten: ID(A), ID(B), K2, h(Menc|K1enc), h(K3) und sig_SE_2(h(K3)). Die folgenden Daten könnten durch passives Lauschen außerhalb sicherer Kanäle abgegriffen werden: Menc und K1enc. Alle anderen Daten werden in sicheren Kommunikationskanälen übertragen. Somit fehlt vorteilhafterweise K3, um M zu erhalten.

### Übersicht der sicheren Einheit SE 2 20

SE_2 20 ist eine sichere und damit vertrauenswürdige Einheit. Sie erzeugt echten Zufall und gibt keine eigenen Geheimnisse preis.

Hinsichtlich der Kommunikation zwischen zwei weiteren Einheiten 30, 40 erhält sie folgende Daten K3, ID(A), ID(B), h(Menc|K1enc), mit Werten Menc und K1enc wie von WE_B empfangen, sowie sig_SE_1(h(Menc|K1enc)|ID(A)|ID(B)). Die folgenden Daten könnten durch passives Lauschen außerhalb sicherer Kanäle abgegriffen werden: Menc, K1enc. Alle anderen Daten werden in sicheren Kanälen übertragen. Somit fehlt vorteilhafterweise K2, um M zu erhalten.

### Übersicht einer Entität, die in der Lage ist, die Kommunikation zwischen den sicheren und weiteren Einheiten 10, 20, 30, 40 passiv zu belauschen

Die folgenden Daten könnten durch passives Lauschen außerhalb sicherer Kanäle abgegriffen werden: Menc und K1enc. Alle anderen Daten werden in sicheren Kommunikationskanälen übertragen. Damit ist M so sicher wie K1. K1 ist so sicher wie K2 und K3. K1, K2 und K3 beruhen auf (Pseudo-)Zufall, der wiederum regelmäßig auf Basis von echtem Zufall bezüglich seiner Entropie erneuert wird.

### Übersicht einer Entität, die in der Lage ist, die Kommunikation zwischen den sicheren und weiteren Einheiten 10, 20, 30, 40 passiv zu belauschen und ihnen aktiv selbst erstellte Nachrichten zukommen zu lassen

Innerhalb der sicheren Kanäle werden derartige Nachrichten erkannt und es folgt eine entsprechende Fehlerbehandlung.

Für den Aufbau eines sicheren Kommunikationskanals wird ein Geheimnis benötigt, das dieser Angreifer nicht erhält. M1enc bzw. K1enc zu verändern bedeutet, dass SE_2 20 die Signatur zu den Daten, die von WE_B 40 kommen, nicht verifizieren kann.

### Bezugszeichenliste

- 1: Kommunikationsnetzwerk
- 10: sichere Einheit
- 12: anfänglicher Datensatz der sicheren Einheit
- 20: sichere Einheit
- 22: anfänglicher Datensatz der sicheren Einheit
- 30: weitere Einheit
- 32: anfänglicher Datensatz der weiteren Einheit
- 33: neuer Zufallswert zur Erneuerung bzw. Aktualisierung des anfänglichen Datensatzes
- 40: weitere Einheit
- 42: anfänglicher Datensatz der weiteren Einheit

## Patentansprüche

1. Verfahren für eine sichere Kommunikation in einem Kommunikationsnetzwerk (1) mit einer Vielzahl von Einheiten (10, 20, 30, 40) mit unterschiedlichen Sicherheitsniveaus, aufweisend die Schritte:
a. Bereitstellen eines jeweiligen anfänglichen Datensatzes (12, 22) für mindestens zwei sichere Einheiten (10, 20) mit einem hohen Sicherheitsniveau der Vielzahl der Einheiten (10, 20, 30, 40);
b. Bereitstellen eines jeweiligen anfänglichen Datensatzes (32, 42) für mindestens zwei weitere Einheiten (30, 40) mit einem im Vergleich zu den mindestens zwei sicheren Einheiten (10, 20) geringeren Sicherheitsniveau der Vielzahl der Einheiten (10, 20, 30, 40), wobei
c. jede weitere Einheit der mindestens zwei weiteren Einheiten (30, 40) an genau eine sichere Einheit der mindestens zwei sicheren Einheiten (10, 20) gebunden ist; wobei
d. der anfängliche Datensatz (32, 42) der mindestens zwei weiteren Einheiten (30, 40) einen Zufallswert aufweist, wobei
e. der anfängliche Datensatz (12, 22) der mindestens zwei sicheren Einheiten (10, 20) einen Zufallswert und mindestens einen Hash-Wert aufweist, wobei der mindestens eine Hash-Wert basierend auf einer kryptographischen Hash-Funktion erstellt wird, welche den Zufallswert der mindestens einen gebundenen weiteren Einheit der mindestens zwei weiteren Einheiten abbildet;
f. Verteilen eines neuen Zufallswerts (33) an eine erste weitere Einheit der mindestens zwei weiteren Einheiten (30, 40) durch eine erste zugehörige sichere Einheit (10) innerhalb eines sicheren Kommunikationskanals;
g. Aktualisieren zumindest eines Teils der anfänglichen Datensätze (12, 32) der ersten weiteren Einheit (30) und der ersten zugehörigen sicheren Einheit (10) unter Berücksichtigung des neuen verteilten Zufallswerts (33) nach erfolgreicher Überprüfung durch die erste zugehörige sichere Einheit (10); und
h. Übermitteln mindestens zweier unterschiedlicher verschlüsselter Werte von der ersten weiteren Einheit (30) an die zweite weitere Einheit (40) der mindestens zwei weiteren Einheiten (30, 40) durch
- Verteilen mindestens zweier zugehöriger unterschiedlicher Entschlüsselungsdatensätze an die mindestens zwei sicheren Einheiten (10, 20) in mindestens einem sicheren Kommunikationskanal durch die erste weitere Einheit (30) derart, dass
anhand der zwei zugehörigen unterschiedlichen Entschlüsselungsdatensätze die mindestens zwei unterschiedlichen verschlüsselten Werte nur kombiniert entschlüsselt werden können und dass die andere weitere Einheit den Entschlüsselungsdatensatz der einen sicheren Einheit erst nach erfolgreicher Prüfung von Autorisierungsdaten der anderen sicheren Einheit durch die eine sichere Einheit erhält und dass die andere weitere Einheit den Entschlüsselungsdatensatz der anderen sicheren Einheit nach erfolgreicher Prüfung von Autorisierungsdaten der einen sicheren Einheit durch die andere sichere Einheit erhält; wobei
sich die mindestens zwei sicheren Einheiten (10, 20) voneinander unterscheiden; wobei
eine zugrundeliegende Nachricht anhand der mindestens zwei unterschiedlichen verschlüsselten Werte und der Entschlüsselungsdatensätze erhalten wird.

2. Verfahren nach Anspruch 1, wobei der Zufallswert (33) durch die sichere Einheit (30, 40) erzeugt wird.

3. Verfahren nach Anspruch 1 oder Anspruch 2, wobei die Vielzahl der Einheiten (10, 20, 30, 40) voneinander separiert ist, insbesondere durch eine HW-Trennung oder logisch.

4. Verfahren nach einem der vorhergehenden Ansprüche, wobei der anfängliche Datensatz (12, 22) der mindestens zwei sicheren (10, 20) und/oder der mindestens zwei weiteren Einheiten (30, 40) jeweils weiterhin eine Konfiguration oder ein Zertifikat aufweist.

5. Verfahren nach Anspruch 4, wobei die Konfiguration oder das Zertifikat die Beziehungen zwischen den sicheren und den weiteren Einheiten (10, 20, 30, 40), eine Einsatzdauer, eine Anzahl zu übertragener Bits, eine maximale Anzahl zu übertragener Bits für den sicheren Kommunikationskanal, Anzahl der Übertragungsrunden und/oder sonstige Daten hinsichtlich Netzwerktopologie oder dem sicheren Kommunikationskanal zwischen weiteren und sicheren Einheiten (10, 20, 30, 40) aufweist.

6. Verfahren nach einem der vorhergehenden Ansprüche, wobei die zugehörige sichere Einheit (10), die sichere Einheit (10) ist, an welche die erste weitere Einheit (30) gebunden ist oder eine andere sichere Einheit (20), an welche die erste weitere Einheit (30) nicht gebunden ist.

7. Verfahren nach Anspruch 6, wobei die Verteilung weiterhin die Schritte aufweist:
- Senden des neuen Zufallswerts an die erste weitere Einheit (30) über einen sicheren Kommunikationskanal durch die erste zugehörige sichere Einheit (10);
- Bestimmen eines neuen Hash-Werts durch die erste weitere Einheit (30), wobei der neue Hash-Wert basierend auf einer kryptographischen Hash-Funktion erstellt wird, welche den neuen Zufallswert (33) berücksichtigt;
- Überprüfen der Korrektheit des neuen Hash-Werts durch diejenige sichere Einheit (10), an welche die erste weitere Einheit (30) gebunden ist,
- Empfangen eines weiteren neuen Hash-Werts durch die sichere Einheit (10) nach erfolgreicher Überprüfung der Korrektheit des neuen Hash-Werts,
falls die mindestens eine sichere Einheit (10) die sichere Einheit (10) ist, an welche die erste weitere Einheit (30) gebunden ist; und
Empfangen des Prüfergebnisses durch die sichere Einheit (20) nach erfolgreicher Überprüfung der Korrektheit des neuen Hash-Werts,
falls die mindestens eine sichere Einheit (20) die andere sichere Einheit (20) ist, an welche die erste weitere Einheit (30) nicht gebunden ist.

8. Verfahren nach Anspruch 7, wobei nach der Verteilung der anfängliche Datensatz (12) der sicheren Einheit (10) aktualisiert wird, an welche die erste weitere Einheit (30), gebunden ist.

9. Verfahren nach einem der vorhergehenden Ansprüche, wobei der Zufallswert und/oder der Hash-Wert der anfänglichen Datensätze aktualisiert werden.

10. Verfahren nach einem der vorhergehenden Ansprüche, wobei das Übermitteln das Senden der neuen Hash-Werte von der weiteren Einheit (30) an die sichere Einheit (10) in dem sicheren Kommunikationskanal umfasst.

11. Verfahren nach einem der vorhergehenden Ansprüche, wobei sich die sichere Einheit (10) gegenüber der weiteren Einheit (30) direkt nach dem anonymen Aufbau des sicheren Kanals authentisiert.

12. Verfahren nach einem der vorhergehenden Ansprüche, wobei die weitere Einheit (30) bei erfolgloser Prüfung kompromittiert ist und in Schritt g. durch die sichere Einheit (10) keine Aktualisierung vorgenommen wird.

13. Kommunikationsnetzwerk (1) zum Durchführen des Verfahrens nach einem der vorhergehenden Ansprüche.

14. Computerprogrammprodukt mit einem Computerprogramm, das Mittel zur Durchführung des Verfahrens nach einem der Ansprüche 1 bis 12 aufweist, wenn das Computerprogramm auf einer programmgesteuerten Einrichtung zur Ausführung gebracht wird.
